# EUROPÄISCHE PATENTSCHRIFT

(11) **EP 2 778 028 B1**
(45) Veröffentlichungstag und Bekanntmachung des Hinweises auf die Patenterteilung: **02.05.2018**
(21) Anmeldenummer: 14159713.8
(22) Anmeldetag: 14.03.2014
(51) Int. Cl.: B62D 55/26, B62D 55/28

(54) **Kettensteganordnung für eine Laufwerkskette eines Kettenfahrzeugs**
Chain stud assembly for a drive chain of a tracked vehicle
Système de barre pour une chenille d'entraînement d'un véhicule à chenilles

(30) Priorität: 15.03.2013 DE 102013204624
(43) Veröffentlichungstag der Anmeldung: 17.09.2014
(60) Teilanmeldung: 18153239.1
(73) Patentinhaber: Kässbohrer Geländefahrzeug AG, 88471 Laupheim (DE)
(72) Erfinder: Schocke, Bernd, 89192 Rammingen (DE)
(74) Vertreter: Patentanwälte Ruff, Wilhelm, Beier, Dauster & Partner mbB

(56) Entgegenhaltungen:
- WO-A1-2008/155425
- AT-B- 327 705
- DE-C1- 10 053 695
- DE-U1- 29 913 344

## Beschreibung

Die Erfindung betrifft eine Kettensteganordnung für eine Laufwerkskette eines Kettenfahrzeugs mit einem Kettensteg, der mit einer Auflagefläche versehen ist, die sich in montiertem Zustand auf wenigstens einem Kettenband der Laufwerkskette abstützt, wobei die Auflagefläche front- und rückseitig - auf eine Kettenlaufrichtung bezogen - mit jeweils einer gekrümmten Seitenrandkontur versehen ist, wobei jede Seitenrandkontur mit wenigstens zwei unterschiedlichen Radien versehen ist, die sich ausgehend von der Auflagefläche über den Verlauf der gekrümmten Seitenrandkontur verkleinern.

Eine derartige Kettensteganordnung ist aus der WO 2008/155425 A1 bekannt. Die bekannte Kettensteganordnung weist einen Kettensteg auf, der im Bereich seiner Auflagefläche wenigstens einen Radius aufweist, der mit den Kettenbändern in Kontakt kommen kann. Der Kettensteg weist zudem einen nach oben anschließenden konkaven Abschnitt und einen erneuten konvexen Abschnitt in Verjüngungsrichtung des Kettenstegs auf.

Aus der DE 299 133 44 U1 ist ein Kettensteg für eine Laufkette eines Raupenfahrzeugs bekannt, der mittels einer Bandunterlage auf einem Kettenband abgestützt ist. Der Kettensteg weist eine kreisbogenförmige Seitenrandkontur auf, wobei der Kreisbogen einen einzigen Radius definiert. Die Seitenrandkontur des Kettensteges liegt auf der Kettenunterlage auf, die wulstförmig um die Seitenrandkontur herum gekrümmt ist.

Eine weitere Kettensteganordnung ist aus der AT 327 705 B bekannt. Die Kettensteganordnung ist Teil einer umlaufenden Laufwerkskette eines Kettenfahrzeugs. Die Laufwerkskette weist als Kettenband ein gewebeverstärktes Laufband auf, auf der in parallelen Abständen zueinander eine Vielzahl von Kettensteganordnungen montiert ist. Jede Kettensteganordnung weist einen sich quer zur Laufrichtung der Laufwerkskette erstreckenden Kettensteg auf, der auf einer Außenseite des Laufbands aufliegt. Auf einer gegenüberliegenden Innenseite des Laufbands ist jedem Kettensteg eine Bandunterlage zugeordnet, die über eine das Laufband durchdringende Schraubverbindung mit dem Kettensteg verbunden ist und Kettensteg und Bandunterlage miteinander sowie an dem Laufband sichert. Sowohl der Kettensteg als auch die zugehörige Bandunterlage sind im Bereich ihrer auf dem Laufband aufliegenden Auflageflächen mit gekrümmten Seitenrändern versehen, wobei die Krümmungen konstante Radien aufweisen.

Aus der DE 100 536 95 C1 ist eine weitere Laufwerkskette für ein Kettenfahrzeug bekannt, bei der verschiedenen Kettensteganordnungen zusätzliche Bestückungsteile in Form von Eisgreifern oder Seitenführungsteilen zugeordnet sind.

Aufgabe der Erfindung ist es, eine Kettensteganordnung der eingangs genannten Art zu schaffen, die eine verbesserte Fahrfunktion eines Kettenfahrzeugs ermöglicht.

Diese Aufgabe wird für eine Kettensteganordnung der eingangs genannten Art dadurch gelöst, dass eine - in Kettenlaufrichtung gesehen - Breite jeder gekrümmten Seitenrandkontur größer ist als ihre Höhe. Durch die erfindungsgemäße Lösung wird eine Schonung des wenigstens einen Kettenbands erzielt. Vorzugsweise weist die Laufwerkskette mehrere, nebeneinander und parallel zueinander verlaufende Kettenbänder auf, die mit den entsprechenden Kettensteganordnungen verbunden sind. Da jede Seitenrandkontur ausgehend von der Auflagefläche mit einem großen Radius beginnt, wird eine schonende Biegung des wenigstens einen Kettenbands bei kleinen Knickwinkeln des wenigstens einen Kettenbands erzielt. Derartige kleine Knickwinkel treten im Fahrbetrieb eines Kettenfahrzeugs wesentlich häufiger auf als große Knickwinkel. Kleine Knickwinkel liegen insbesondere im Bereich zwischen 0° und 10°, ausgehend von einer durch die Auflagefläche an wenigstens einem Kettenband definierten Ausgangsebene. Größere Knickwinkel liegen vorzugsweise zwischen 10° und 45°. Knickwinkel von mehr als 45° werden im praktischen Fahrbetrieb eines Kettenfahrzeugs nahezu nie erreicht. Dadurch, dass die Seitenrandkonturen ausgehend von der Auflagefläche mit einem großen Radius beginnen, der sich im Verlauf der jeweiligen Seitenrandkontur verkleinert, kann in vorteilhafter Weise auch die Breite der Auflagefläche des Kettenstegs auf dem Kettenband vergrößert werden, ohne dass die Breite des Kettenstegs insgesamt vergrößert werden muss. Hierdurch ist eine verbesserte Abdeckung von Bandstanzlöchern erzielbar, die in dem wenigstens einen Kettenband für die Befestigung der jeweiligen Kettensteganordnung vorhanden sind. Die erfindungsgemäße Lösung ist in besonders vorteilhafter Weise für Kettenfahrzeuge in Form von Pistenraupen vorgesehen, die zur Gestaltung und Bearbeitung von Schneepisten in Skigebieten dienen. Dadurch, dass die Breite jeder gekrümmten Seitenrandkontur - in Kettenlaufrichtung gesehen - größer ist als ihre Höhe, ist eine kompaktere Gestaltung des Kettenstegs ermöglicht, wodurch Bauraum eingespart werden kann.In Ausgestaltung der Kettensteganordnung mit wenigstens einem Bestückungsteil, das an dem Kettensteg lösbar befestigt ist, ist vorgesehen, dass das Bestückungsteil eine Querschnittskontur aufweist, die eine Spitze des Kettenstegs formschlüssig übergreift und diese beidseitig flankiert. Dadurch ist eine besonders gute Abstützung des wenigstens einen Bestückungsteils am Kettensteg erzielbar, wodurch eine besonders stabile Befestigung der Bestückungsteile an den Kettenstegen erzielt werden kann. Dadurch können die Bestückungsteile zum einen in verbesserter Weise ihre jeweilige Greif-, Abstütz- oder Sicherungsfunktion auf den Untergrund ausüben, der durch die Laufwerkskette befahren wird. Zum anderen ist eine längere Haltbarkeit der Bestückungsteile gewährleistet, als dies beim Stand der Technik der Fall war. In besonders vorteilhafter Weise sind die Bestückungsteile als Seitenführungsteile oder als Eisgreifteile ausgeführt. Durch die erfindungsgemäße Gestaltung der Bestückungsteile und die formschlüssige Abstützung an dem jeweiligen Kettensteg werden lösbare Befestigungsmittel entlastet, die zur Sicherung des jeweiligen Bestückungsteils am Kettensteg dienen.

In weiterer Ausgestaltung der Kettensteganordnung, wobei der Kettensteg im Bereich seiner Spitze eine Aufnahmenut für einen Einsatz einer Verschleißschiene aufweist, ist vorgesehen, dass die Verschleißschiene stoffschlüssig, insbesondere durch Verklebung, in der Aufnahmenut gehalten ist. Im Gegensatz zu einer aus dem Stand der Technik bekannten punktuellen Befestigung der Verschleißschiene in der entsprechenden Aufnahmenut erfolgt erfindungsgemäß eine flächige und stoffschlüssige Verbindung zwischen Aufnahmenut und Verschließschiene. Zudem entfallen Bohrungen für die Befestigung der Verschleißschiene am Kettensteg, die Kerbwirkungen entfalten könnten. In besonders vorteilhafter Weise erfolgt die stoffschlüssige Verbindung durch eine Verklebung mittels eines hochfesten Klebstoffes, der für die Verarbeitungszeit flüssig ist und anschließend aushärtet. Als stoffschlüssige Verbindung kann auch eine Verschweißung zwischen Verschleißschiene und Aufnahmenut vorgesehen sein.

In weiterer Ausgestaltung der Erfindung ist die Verschleißschiene gezahnt gestaltet. Die gezahnte Verschleißschiene kann in der Aufnahmenut des Kettenstegs form-, kraft- oder stoffschlüssig gehalten sein. Dadurch ist ein besonders guter Eingriff in einen entsprechenden Schneeuntergrund gewährleistet. Die gezahnte Gestaltung der über die Aufnahmenut des Kettenstegs nach außen abragenden Außenseite der Verschleißschiene sichert einen Rückhalt des zugehörigen Kettenstegs quer zur Laufrichtung der Laufwerkskette und damit in Längsrichtung des Kettenstegs.

In weiterer Ausgestaltung der Erfindung weist das Bestückungsteil einen zu einem Verzahnungsabschnitt der Verschließschiene komplementären Stückabschnitt auf, der - in Längsrichtung des Kettenstegs gesehen - formschlüssig an dem Verzahnungsabschnitt der Verschleißschiene abgestützt ist. Vorzugsweise greift der Stützabschnitt formschlüssig in Zahnlücken des Verzahnungsabschnitts ein. In besonders vorteilhafter Weise ist der Stützabschnitt keilförmig gestaltet und die Verzahnungsabschnitte der Verschleißschiene weisen korrespondierend trapezförmige Zahnlücken auf, in die der Stützabschnitt sich unter Erzielung eines besonders guten Formschlusses bei Belastung hineindrücken kann.

In weiterer Ausgestaltung der Erfindung weist das Bestückungsteil wenigstens einen Konturabschnitt auf, der derart auf eine Verzahnungsleiste der Verschleißschiene abgestimmt ist, dass der Konturabschnitt - quer zur Längsrichtung des Kettenstegs gesehen - formschlüssig die Verzahnungsleiste beidseitig flankiert. Der Konturabschnitt kann als Nutabschnitt im Bestückungsteil vorgesehen sein, dessen Breite der Dicke der Verzahnungsleiste entspricht. Dadurch stützt das Bestückungsteil sich nicht nur formschlüssig beidseitig des Kettenstegs, sondern ergänzend auch noch formschlüssig beidseitig der Verzahnungsleiste der Verschleißschiene ab.

In weiterer Ausgestaltung der Erfindung weist das Bestückungsteil seitliche Befestigungsstege auf, die derart asymmetrisch zu einem Funktionsabschnitt des Bestückungsteils angeordnet sind, dass das Bestückungsteil in zwei um 180° gedrehten, unterschiedlichen Ausrichtungen mit dem Kettensteg verbindbar ist. Dadurch ist es möglich, die Bestückungsteile benachbarter Kettensteganordnungen versetzt zueinander auszurichten.

In weiterer Ausgestaltung der Erfindung sind an der Verschleißschiene und/oder an dem Kettensteg Kodierungen vorgesehen, die eine Montageposition des Bestückungsteils für eine nachträgliche Montage kennzeichnen. Dadurch wird in vorteilhafter Weise eine von außen sichtbare Montagestelle für ein entsprechendes Bestückungsteil geschaffen, was die Montage des Bestückungsteils vereinfacht.

Weitere Vorteile und Merkmale der Erfindung ergeben sich aus den Ansprüchen. Nachfolgend ist ein bevorzugtes Ausführungsbeispiel der Erfindung beschrieben und anhand der Zeichnungen dargestellt.
- Fig. 1: zeigt in einer Frontansicht eine Pistenraupe mit zwei Laufwerksketten, die jeweils mehrere Kettensteganordnungen einer erfindungsgemäßen Ausführungsform umfassen,
- Fig. 2: in vergrößerter isometrischer Darstellung einen Teil einer Laufwerkskette ähnlich Fig. 1,
- Fig. 3: in einer Schnittdarstellung eine Ausführungsform einer erfindungsgemäßen Kettensteganordnung für eine Laufwerkskette nach Fig. 2,
- Fig. 4: einen Ausschnitt eines Kettenstegs der Kettensteganordnung nach Fig. 3 in nach unten gewandter Ausrichtung,
- Fig. 5: in stark vergrößerter Darstellung einen Ausschnitt der Querschnittsdarstellung des Kettenstegs nach Fig. 4,
- Fig. 6: einen Ausschnitt einer Bandunterlage der Kettensteganordnung nach Fig. 3, ebenfalls in vergrößerter Darstellung,
- Fig. 7: in einer Querschnittsdarstellung den Kettensteg nach Fig. 3 mit eingesetzter Verschleißschiene,
- Fig. 8: den Kettensteg nach Fig. 7 mit aufgesetztem Bestückungsteil,
- Fig. 9: einen Ausschnitt des mit dem Bestückungsteil versehenen Kettenstegs nach Fig. 8, jedoch in vergrößerter Darstellung und in gegenüber der Darstellung nach Fig. 8 versetzter Schnittebene,
- Fig. 10: in vergrößerter isometrischer Darstellung einen Ausschnitt des mit dem Bestückungsteil versehenen Kettenstegs nach den Fig. 7 bis 9,
- Fig. 11: den Kettensteg nach Fig. 7 in vergrößerter, isometrischer Teildarstellung mit einem Bestückungsteil in Form eines Eisgreifers und
- Fig. 12: einen Querschnitt durch eine weitere Ausführungsform eines Kettenstegs ähnlich Fig. 7.

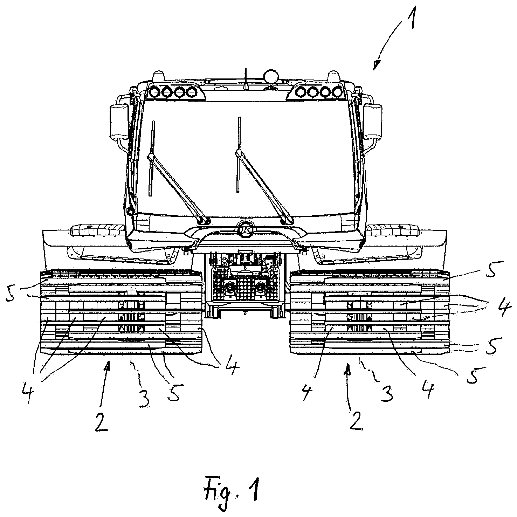

Eine Pistenraupe 1 gemäß Fig. 1 weist einen Fahrwerksrahmen auf, auf dem frontseitig ein Fahrerhaus aufgesetzt ist. Ein Laufwerk der Pistenraupe 1 weist zwei Laufwerksketten 2 auf, die jeweils durch mehrere Laufräder und ein Turasrad geführt sind, die in einer gemeinsamen vertikalen Radebene 3 hintereinander angeordnet sind. Die Turasräder des Laufwerks werden über Hydromotoren angetrieben, die Teil eines Hydraulikkreislaufs sind, der über einen zentralen Verbrennungsmotor in Form eines Dieselmotors in Verbindung mit einer hierdurch angetriebenen Hydraulikpumpe druckbeaufschlagt wird.

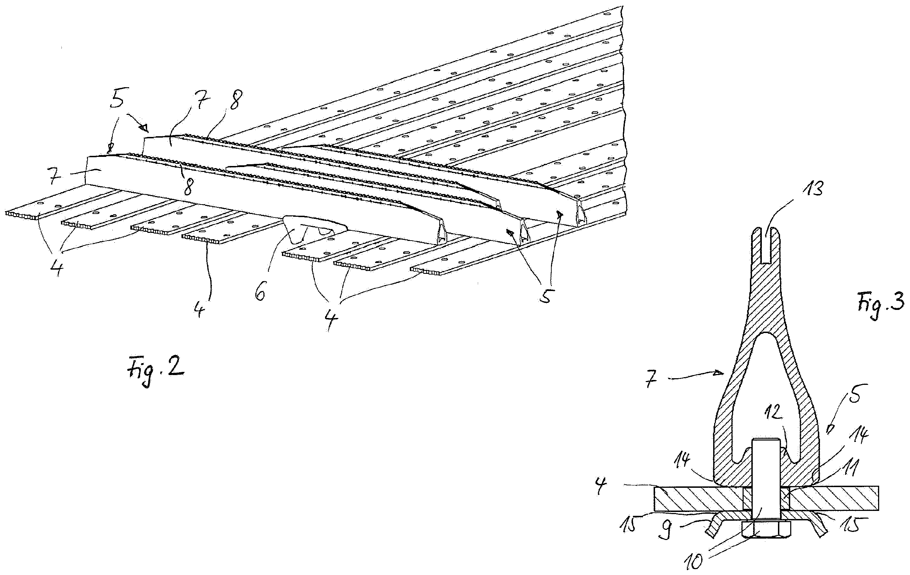

Jede Laufwerkskette 2 weist mehrere in Laufrichtung umlaufende, flexible Kettenbänder 4 auf, die über eine Vielzahl von quer zur Kettenlaufrichtung ausgerichteten Kettensteganordnungen 5 miteinander verbunden sind. Jede Kettensteganordnung weist einen Kettensteg 7 auf, der sich außenseitig auf Bandflächen der Kettenbänder abstützt, sowie eine Bandunterlage, die sich innenseitig an den Kettenbändern 4 abstützt und über mehrere Schraubverbindungen 10 mit dem außenseitigen Kettensteg 7 verbunden ist (siehe Fig. 3). Jede Kettensteganordnung 5 erstreckt sich über mehrere Kettenbänder 4, wobei benachbarte Kettensteganordnungen 5 in Fahrzeugquerrichtung zueinander versetzt angeordnet sind. Wie anhand der Fig. 2 erkennbar ist, können die benachbarten Kettensteganordnungen 5 unterschiedliche Längen aufweisen, wobei sich gemäß Fig. 2 die - in Fahrzeugquerrichtung gesehen - außenseitigen Kettensteganordnungen 5 über sechs Kettenbänder 4 und die innenseitigen Kettensteganordnungen 5 sich über fünf Kettenbänder 4 erstrecken. In jedem Kettenband 4 sind zur Befestigung der jeweiligen Kettensteganordnung 5 jeweils zwei in Fahrzeugquerrichtung, d.h. quer zur Kettenlaufrichtung, fluchtende Bandlöcher vorgesehen, in die jeweils eine Bandlochbuchse 11 eingesetzt ist. Die Schraubverbindungen 10 ragen durch diese Bandlochbuchsen 11 hindurch. Jeder Kettensteg 7 ist mit Gewindebohrungen 12 zur Aufnahme der Schraubverbindungen 10 versehen.

Jede Laufwerkskette wird im Bereich der vertikalen Radebene 3 über Spurbügel 6 auf den Laufrädern und dem Turasrad geführt. Jeder Spurbügel 6 ist gemäß Fig. 2 zwischen zwei benachbarten Kettenbändern 4 an einer Unterseite des jeweiligen Kettenstegs 7 jeder Kettensteganordnung 5 befestigt und ragt von der Unterseite des jeweiligen Kettenstegs 7 aus nach innen ab.

Jeder Kettensteg 7 weist im Bereich seiner dem Kettenband 4 gegenüberliegenden Spitze eine zentrisch von oben her in den Kettensteg 7 eingebrachte Aufnahmenut 13 auf, in die eine nachfolgend näher beschriebene Verschleißschiene 8 eingesetzt und durch flächige Verklebung in der Aufnahmenut 13 befestigt ist.

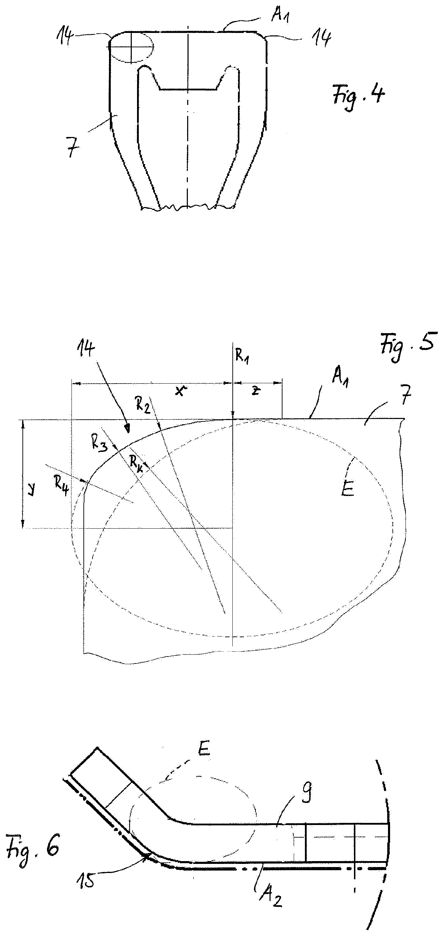

Jeder Kettensteg 7 ist als einteiliges Leichtmetallprofil ausgeführt und weist im Bereich seiner den Kettenbändern 4 zugewandten Unterseite eine ebene Auflagefläche A₁ (Fig. 4) auf, die flächig auf den ebenfalls flächigen Bandoberflächen der Kettenbänder 4 aufliegt. Jede dem Kettensteg 7 gegenüberliegende Bandunterlage 9 jeder Kettensteganordnung 5 ist ebenfalls als längserstrecktes Metallprofil ausgeführt, dessen Länge auf die Länge des zugeordneten Kettenstegs 7 abgestimmt ist. Die Länge der Bandunterlage 9 entspricht der Länge des zugeordneten Kettenstegs 7. Jede Bandunterlage 9 liegt ebenfalls mittels einer ebenen Auflagefläche A₂ an einer innenseitigen Bandoberfläche jedes Kettenbands 4 an.

Jeder Kettensteg 7 weist an seinen gegenüberliegenden Seitenrändern an die ebene Auflagefläche A₁ anschließend jeweils eine gekrümmte Seitenrandkontur 14 auf, die anhand der Fig. 4 und 5 näher dargestellt ist. Komplementär hierzu ist auch das die Bandunterlage 9 bildende Metallprofil seitlich nach außen an die ebene Auflagefläche A₂ anschließend beidseitig mit jeweils einer Krümmungskontur 15 versehen, die analog aber gegensinnig gekrümmt ist zu der jeweils benachbarten Seitenrandkontur 14 des zugeordneten Kettenstegs 7.

Wie anhand der Fig. 4 und 5 erkennbar ist, weist jede Seitenrandkontur 14 des Kettenstegs 7 von der ebenen Auflagefläche A₁ ausgehend eine Krümmung mit unterschiedlichen Radien auf, die ausgehend vom Beginn des Verlaufs der Krümmung im Bereich der Auflagefläche A₁ zur vertikalen Seitenwandung des Kettenstegs 7 hin immer kleiner werden. Die Krümmung der Seitenrandkontur 14 folgt, wie anhand der gestrichelten Darstellung in Fig. 5 erkennbar ist, der Kontur einer Ellipse E. Der größte Radius R₁ beginnt am seitlichen Ende der ebenen Auflagefläche A₁. Der anschließende Radius R₂ ist bereits kleiner als der Radius R₁. Der im Verlauf der Krümmung zur Seite hin weiter anschließende Radius R₃ ist kleiner als der Radius R₂. Der zur vertikalen Seitenwandung des Kettenstegs 7 hin abschließende Radius R₄ ist wiederum kleiner als der Radius R₃. Damit ergibt sich für die Seitenrandkontur 14 eine Krümmung, bei der sich im Verlauf der Krümmung - ausgehend von der Auflagefläche A₁ - kleiner werdende Radien aneinanderfügen.

Zum Vergleich ist in gestrichelter Darstellung in Fig. 5 eine Seitenrandkontur eines aus dem Stand der Technik bekannten Kettenstegs mit konstantem Radius Rₖ gezeigt. Dabei ist erkennbar, dass bei gleichen Begrenzungen des Kettenstegs durch die ebene Auflagefläche A₁ einerseits und die vertikale Seitenwandung andererseits die Krümmung mit konstantem Radius Rₖ bereits weiter innen zur Mitte hin an der Auflagefläche A₁ ansetzen muss, um in die vertikale Seitenwandung des Kettenstegs 7 auslaufen zu können. Bei der Ausführungsform nach Fig. 5 ist die Krümmung mit konstantem Radius Rₖ um den Längenbetrag z weiter zur Mitte hin versetzt als der Ansatz der Krümmung mittels des Radius R₁ bei elliptischer Krümmungsform. Dies bedeutet, dass bei der Seitenrandkontur 14 gemäß Fig. 5 mit unterschiedlichen Radien die Länge der Auflagefläche A₁ zu beiden Seiten hin um den Betrag z eben vergrößert ist im Vergleich zu einer Seitenrandkontur mit gekrümmtem Radius. Gleichzeitig ist auch das Breiten- und Höhenverhältnis der Krümmung der Seitenrandkontur 14 gemäß Fig. 5 gegenüber einer Krümmung mit konstantem Radius Rₖ verändert. Dies ist verdeutlicht durch die Breitenerstreckung x einerseits und die Höhenerstreckung y andererseits. Bei der elliptischen Krümmung mit den unterschiedlichen Radien R₁ bis R₄ ist das Verhältnis x zu y größer als 1. Bei einem konstanten Radius Rₖ ist das Breiten-/Höhenverhältnis zwangsläufig gleich 1. Neben dem Vorteil, dass bei gleichen Abmessungen des Kettenstegs 7 eine breitere ebene Auflagefläche A₁ mit der erfindungsgemäßen Seitenrandkontur 14 erzielt wird, benötigt die Seitenrandkontur 14 auch eine reduzierte Höhe am Kettensteg 7, so dass der Kettensteg 7 bei gleicher Breite insgesamt kompakter gestaltet werden kann als ein Kettensteg mit konstantem Radius Rₖ aus dem Stand der Technik.

Beim dargestellten Ausführungsbeispiel gemäß den Fig. 4 und 5 beträgt der Radius R₁ 9,4 mm, der Radius R₂ 8 mm, der Radius R₃ 6 mm und der Radius R₄ 2mm. Der in Fig. 5 dargestellte konstante Radius Rₖ beträgt 8 mm. Der Längenbetrag z entspricht 2 mm. Die Breitenerstreckung x entspricht 6,5 mm und die Höhenerstreckung y 4,5 mm.

Die Bandunterlage 9 gemäß Fig. 6 ist in ihrer Krümmungskontur 15 in analoger Weise elliptisch längs der Ellipsenkontur E gekrümmt, wie dies bei der Seitenrandkontur 14 des Kettenstegs 7 nach Fig. 5 der Fall ist. Da die Bandunterlage 9 im Bereich der Krümmungskontur 15 aber nicht eine Krümmung der Randkontur um 90° bewirkt, wie dies beim Kettensteg 7 nach Fig. 5 der Fall ist, setzen bei der Bandunterlage 9 lediglich maximal drei Radien R₁ bis R₃ aneinander an, wobei auch hier ausgehend von der ebenen Auflagefläche A₂ der größte Radius R₁ den Krümmungsverlauf beginnt und der kleinste Radius, nämlich der Radius R₃, den Krümmungsverlauf beendet. Die Werte der Radien R₁ bis R₃ entsprechen den Werten, die zur Seitenrandkontur 14 nach Fig. 5 in der Beschreibung bereits angegeben wurden.

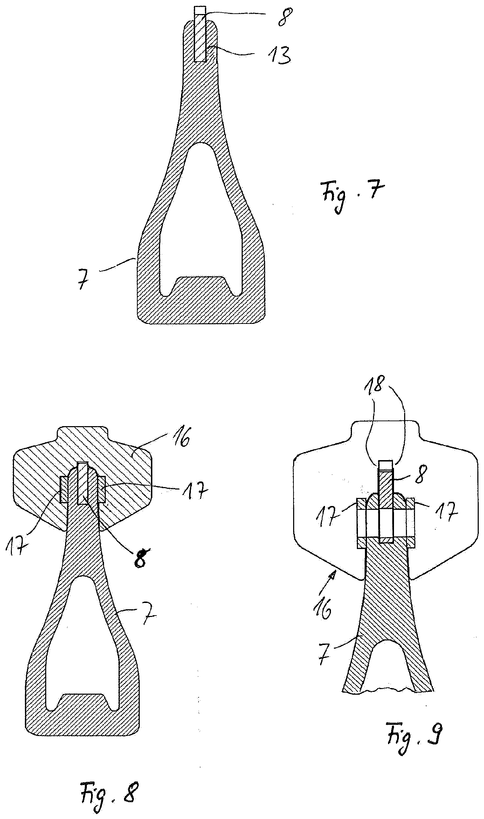

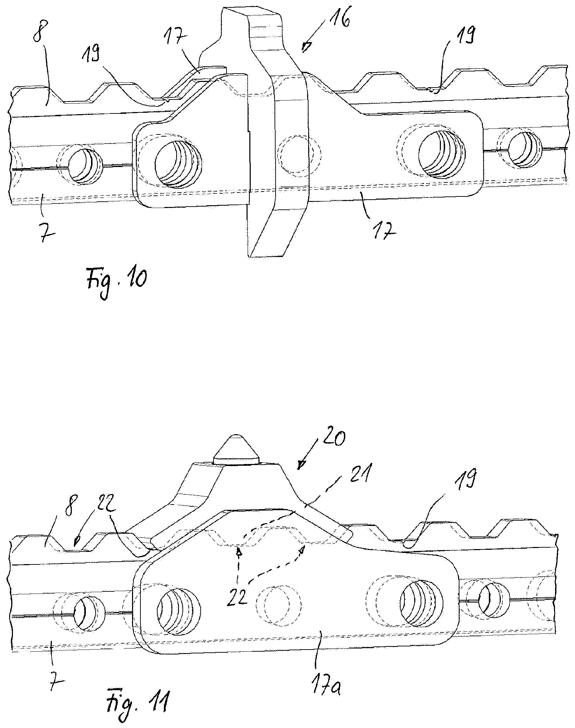

Anhand der Fig. 7 ist erkennbar, dass in einer Spitze des Kettenstegs 7 eine Aufnahmenut 13 eingebracht ist, die schlitzförmig gestaltet ist und sich über eine gesamte Länge des Kettenstegs 7 erstreckt. Die Aufnahmenut 13 ist koaxial zu einer vertikalen Mittellängsebene des Kettenstegs 7 eingebracht. In der Aufnahmenut 13 ist eine Verschleißschiene 8 aufgenommen, die über weitgehend die gesamte Länge der Aufnahmenut 13 einteilig erstreckt ist. Die Verschleißschiene 8 ist flächig in die Aufnahmenut 13 eingeklebt. Die Aufnahmenut 8 weist im Bereich ihrer Oberseite eine Verzahnungsleiste auf, die durch trapezartige Zähne und dazwischenliegende, ebenfalls trapezförmige Zahngründe 22 (Fig. 11) gebildet ist. Die Verschleißschiene 8 ist als Stahlprofil ausgeführt.

Wie anhand der Fig. 8 bis 11 erkennbar ist, können auf die Spitze jedes Kettenstegs 7 Bestückungsteile aufgesetzt und lösbar mit dem Kettensteg 7 verbunden werden. Bei der Ausführungsform nach den Fig. 8 bis 10 ist als Bestückungsteil 16 ein Seitenführungsteil vorgesehen. Bei der Ausführungsform nach Fig. 11 ist als Bestückungsteil ein Eisgreiferteil 20 vorgesehen. Beide Bestückungsteile weisen ein Funktionselement, d.h. ein Seitenführungselement oder ein Eisgreifelement, auf, das von oben her auf die Spitze des Kettenstegs 7 aufgesetzt ist. Zudem weisen beide Bestückungsteile jeweils zwei Befestigungsstege 17, 17a auf, die die Verschleißschiene und die Spitze des Kettenstegs 7 auf gegenüberliegenden Seiten flankieren und die jeweils einteilig mit dem Funktionselement verbunden sind, vorzugsweise durch Verschweißung. Die Befestigungsstege 17, 17a erstrecken sich laschenförmig parallel zu der Verschleißschiene 8 bzw. zur entsprechenden Seitenwandung der Spitze des Kettenstegs 7. Die Befestigungsstege 17 erstrecken sich relativ zum Funktionselement des jeweiligen Bestückungsteils 16, 20 asymmetrisch, d.h. ein Laschenabschnitt jedes Befestigungsstegs 17, 17a, der vom Funktionselement weg ragt ist länger als der andere Laschenabschnitt jedes Befestigungsstegs 17, 17a, der in entgegengesetzter Richtung abragt. Diese asymmetrische Ausrichtung ist anhand der Fig. 10 und 11 gut erkennbar.

Die Bestückungsteile 16, 20 werden mithilfe von Schraubverbindungen mit dem Kettensteg 7 und der Verschleißschiene 8 verbunden. Hierzu sind in den gegenüberliegenden Befestigungsstegen 17, 17a jedes Bestückungsteils jeweils zwei in Längsrichtung des Kettenstegs 7 zueinander beabstandete Bohrungen vorgesehen, denen im Bereich der Spitze des Kettenstegs 7 und im Bereich der Verschleißschiene 8 korrespondierende und fluchtende Bohrungen zugeordnet sind (siehe Fig. 9 bis 11).

Die Funktionselemente der Bestückungsteile 16, 20, d.h. das Seitenführungselement gemäß den Fig. 8 bis 10 und das Eisgreiferelement gemäß Fig. 11, sind im Bereich ihrer zur Verschließschiene 8 und zum Kettensteg 7 gewandten Unterseite mit keilförmigen Stützabschnitten 21 (siehe Fig. 11) versehen, die sich in einem oder mehreren Zahngründen 22 an den Seitenflanken der Zähne abstützen, die die Zahngründe 22 flankieren. Zudem weisen die Funktionselemente der Bestückungsteile 16, 20 im Bereich ihrer Unterseite Nutbereiche 18 auf, deren Tiefe und Breite auf die Verzahnungsleiste der Verschleißschiene 8 abgestimmt sind. Dadurch stützen sich die Funktionselemente der Bestückungsteile 16, 20 nicht nur von oben her auf der Verzahnungsleiste der Verschleißschiene 8 sowie seitlich an den Seitenwandungen des Kettenstegs 7 ab, sondern zusätzlich auch an den in Kettenlaufrichtung oder entgegen der Kettenlaufrichtung ausgerichteten Seitenflanken der Verschleißschiene 8. Die Bestückungsteile 16, 20 stützen sich demzufolge formschlüssig in mehreren Richtungen an der Verschließschiene 8 und dem Kettensteg 7 ab, nämlich sowohl in und entgegen der Kettenlaufrichtung als auch quer zur Kettenlaufrichtung, d.h. in Längsrichtung des jeweiligen Kettenstegs 7.

Die Bestückungsteile 16, 20 können statt in der in Fig. 10 und 11 gezeigten Ausrichtung auch um eine Hochachse um 180° verdreht auf die Verschließschiene 8 und den Kettensteg 7 aufgesetzt werden. Dadurch ist es möglich, bei benachbarten Kettenstegen einer Laufwerkskette die Funktionselemente der Bestückungsteile 16, 20 in zueinander versetzten Längsfluchten auszurichten.

Um die Positionierung der Bestückungsteile 16, 20 im Bereich jedes Kettenstegs 7 und der zugeordneten Verschleißschiene 8 zu erleichtern, sind an der Verschließschiene 8 zudem Kodierungen in Form von Kerben 19 im Bereich von zwei zueinander beabstandeten Zahngründen 22 vorgesehen. Die Kodierungen 19 sind auf Höhe der Bohrungen der Bestückungsteile 16, 20 vorgesehen. Dadurch ist für einen Monteur erkennbar, wo er - über die Länge des Kettenstegs 7 gesehen - die Bestückungsteile 16, 20 positionieren und mittels der Schraubverbindungen befestigen soll.

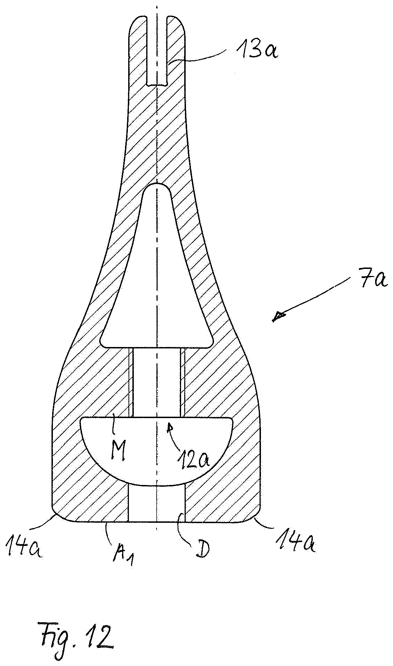

Ein Kettensteg 7a nach Fig. 12 entspricht im Wesentlichen dem zuvor bereits ausführlich beschriebenen Kettensteg 7 gemäß den Figuren 1 bis 11. Der Kettensteg 7a wird in gleicher Weise eingesetzt wie der zuvor anhand der Figuren 1 bis 11 beschriebene Kettensteg. Zur Vermeidung von Wiederholungen wird daher auf die Ausführungen zu den Figuren 1 bis 11 verwiesen. Der Kettensteg 7a weist im Bereich seiner Spitze eine Aufnahmenut 13a auf, in die eine Verschleißschiene einsetzbar und insbesondere stoffschlüssig mit der Spitze des Kettensteges verbindbar ist. Der Kettensteg 7a weist an seiner den Kettenbändern zugewandten Seite eine ebene Auflagefläche A₁ sowie an diese anschließend jeweils eine gekrümmte Seitenrandkontur 14a auf, die identisch gestaltet sind wie die zuvor ausführlich beschriebenen Seitenrandkonturen 14 des Kettensteges 7. Die Seitenrandkonturen 14a sind - wie die Seitenrandkonturen 14 der Kettenstege 7 gemäß den Figuren 1 bis 11 - in einem Krümmungsbereich von 90° - ausgehend von der Auflagefläche A₁ - mit wenigstens zwei unterschiedlichen Radien versehen, die sich ausgehend von der Auflagefläche A₁ über den Verlauf der gekrümmten Seitenrandkontur 14, 14a in dem genannten Krümmungswinkel verkleinern.

Wesentlicher Unterschied bei dem Kettensteg 7a gemäß Fig. 12 ist es, dass dort entsprechende Gewindebohrungen 12a zur Aufnahme von Schraubverbindungen 10 (analog Fig. 3) in einem Mittelsteg M des Kettensteges 7a vorgesehen sind, der zu der Auflagefläche A₁ beabstandet ist. Zwischen dem die Auflagefläche A₁ bildenden Materialabschnitt des Kettensteges 7a und dem Mittelsteg M des Kettensteges 7a ist ein Hohlraum vorgesehen. Der Mittelsteg M ist einstückiger Teil des Kettensteges 7a. In dem die Auflagefläche A₁ definierenden Materialabschnitt des Kettensteges 7a ist ein Durchtritt D vorgesehen, dessen Durchmesser geringfügig größer ist als ein Durchmesser der jeweiligen Gewindebohrung 12a. Der Durchtritt D ist jeweils - relativ zu einer Mittellängsachse der jeweiligen Gewindebohrung 12a gesehen - fluchtend zu der korrespondierenden Gewindebohrung 12a angeordnet. Durch diese Ausgestaltung ist eine vereinfachte Montage und Demontage von Kettenstegen 7a gewährleistet, da die Durchtritte D beim Einführen der Schraubverbindungen eine Zentrierhilfe bilden, die die entsprechenden Schraubverbindungen bereits weitgehend fluchtend zu den Gewindebohrungen 12a ausrichten, bevor entsprechend komplementäre Gewinde jeweils einer Schraube und der zugehörigen Gewindebohrung 12a ineinandergreifen. Für einen Monteur ist demzufolge der Austausch eines entsprechenden Kettensteges 7a und die Montage im Bereich der Kettenbänder und entsprechender Bandunterlagen vereinfacht.

## Patentansprüche

1. Kettensteganordnung für eine Laufwerkskette eines Kettenfahrzeugs mit einem Kettensteg (7), der mit einer Auflagefläche (A₁) versehen ist, die sich in montiertem Zustand auf wenigstens einem Kettenband (4) der Laufwerkskette (2) abstützt, wobei die Auflagefläche (A₁) front- und rückseitig - auf eine Kettenlaufrichtung bezogen - mit jeweils einer gekrümmten Seitenrandkontur (14) versehen ist, wobei jede Seitenrandkontur (14) mit wenigstens zwei unterschiedlichen Radien (R₁ bis R₄) versehen ist, die sich ausgehend von der Auflagefläche (A₁) über den Verlauf der gekrümmten Seitenrandkontur (14) verkleinern, **dadurch gekennzeichnet, dass** eine - in Kettenlaufrichtung gesehen - Breite jeder gekrümmten Seitenrandkontur (14) größer ist als ihre Höhe.

2. Kettensteganordnung nach Anspruch 1, mit wenigstens einem Bestückungsteil (16, 20), das an dem Kettensteg (7) lösbar befestigt ist, **dadurch gekennzeichnet, dass** das Bestückungsteil (16, 20) eine Querschnittskontur aufweist, die eine Spitze des Kettenstegs (7) formschlüssig übergreift und beidseitig flankiert.

3. Kettensteganordnung nach einem der vorhergehenden Ansprüche, wobei der Kettensteg (7) im Bereich seiner Spitze eine Aufnahmenut (13) für einen Einsatz einer Verschleißschiene (8) aufweist, **dadurch gekennzeichnet, dass** die Verschleißschiene (8) stoffschlüssig, insbesondere durch flächige Verklebung, in der Aufnahmenut (13) gehalten ist.

4. Kettensteganordnung nach Anspruch 3, **dadurch gekennzeichnet, dass** die Verschleißschiene eine Verzahnungsleiste umfasst.

5. Kettensteganordnung nach Anspruch 4, **dadurch gekennzeichnet, dass** das Bestückungsteil (16, 20) einen zu einem Verzahnungsabschnitt der Verzahnungsleiste der Verschleißschiene (8) komplementären Stützabschnitt (21) aufweist, der - in Längsrichtung des Kettenstegs (7) gesehen - formschlüssig an der Verzahnungsleiste der Verschleißschiene abgestützt ist.

6. Kettensteganordnung nach Anspruch 4 oder 5, **dadurch gekennzeichnet, dass** das Bestückungsteil (16, 20) wenigstens einen Konturabschnitt (18) aufweist, der derart auf eine Verzahnungsleiste der Verschleißschiene (8) abgestimmt ist, dass der Konturabschnitt (18) formschlüssig - quer zur Längsrichtung des Kettenstegs (7) gesehen - die Verzahnungsleiste beidseitig flankiert.

7. Kettensteganordnung nach einem der Ansprüche 2 bis 6, **dadurch gekennzeichnet, dass** das Bestückungsteil (16, 20) seitliche Befestigungsstege (17, 17a) aufweist, die derart asymmetrisch zu einem Funktionselement des Bestückungsteils (16, 20) angeordnet sind, dass das Bestückungsteil (16, 20) in zwei um 180° gedrehten, unterschiedlichen Ausrichtungen mit dem Kettensteg (7) verbindbar ist.

8. Kettensteganordnung nach einem der Ansprüche 2 bis 7, **dadurch gekennzeichnet, dass** an der Verschleißschiene (8) und/oder an dem Kettensteg (7) Kodierungen (19) vorgesehen sind, die eine Montageposition des Bestückungsteils (16, 20) für eine nachträgliche Montage kennzeichnen.

9. Laufwerkskette mit mehreren Kettenbändern (4) sowie mit mehreren Kettensteganordnungen (5) nach wenigstens einem der vorhergehenden Ansprüche.

## Claims

1. Chain grouser arrangement for a crawler chain of a tracked vehicle, having a chain grouser (7) provided with a contact surface (A₁) supported on at least one chain belt (4) of the crawler chain (2) in the installed condition, wherein the contact surface (A₁) is provided with a respective curved marginal contour (14) on each of the front and rear sides, in relation to the chain running direction, wherein each marginal contour (14) is provided with at least two different radii (R₁ to R₄), which radii decrease starting from the contact surface (A₁) across the extension of the curved marginal contour (14),
**characterized in that**
a width of each curved marginal contour (14) is greater than its height, as seen in the chain running direction.

2. Chain grouser arrangement according to claim 1, having at least one equipment part (16, 20) releasably fixed to the chain grouser (7), **characterized in that** the equipment part (16, 20) has a cross-sectional contour which overlaps a tip of the chain grouser (7) in a form-fitting manner and flanks it on both sides.

3. Chain grouser arrangement according to any one of the preceding claims, wherein the chain grouser (7), in the region of its tip, has an accommodating groove (13) for inserting a wear bar (8), **characterized in that** the wear bar (8) is retained in the accommodating groove (13) in material bonding engagement, in particular by extensive adhesive bonding.

4. Chain grouser arrangement according to claim 3, **characterized in that** the wear bar comprises an interlocking strip.

5. Chain grouser arrangement according to claim 4, **characterized in that** the equipment part (16, 20) has a support portion (21) complementary to an interlocking portion of the interlocking strip of the wear bar (8), which support portion is supported in a form-fitting manner on the interlocking strip of the wear bar, as seen in the longitudinal direction of the chain grouser (7).

6. Chain grouser arrangement according to claim 4 or 5, **characterized in that** the equipment part (16, 20) has at least one contour portion (18) which is matched to an interlocking strip of the wear bar (8) such that the contour portion (18) flanks the interlocking strip on both sides in a form-fitting manner, as seen transversely to the longitudinal direction of the chain grouser (7).

7. Chain grouser arrangement according to any one of claims 2 to 6, **characterized in that** the equipment part (16, 20) has lateral fixation webs (17, 17a) arranged asymmetrically to a functional element of the equipment part (16, 20) such that the equipment part (16, 20) is capable of being connected to the chain grouser (7) in two different orientations, turned by 180°.

8. Chain grouser arrangement according to any one of claims 2 to 7, **characterized in that** codings (19) are provided on the wear bar (8) and/or on the chain grouser (7) to indicate an installation position of the equipment part (16, 20) for subsequent installation.

9. Crawler chain having a plurality of chain belts (4) and having a plurality of chain grouser arrangements (5) according to at least one of the preceding claims.

## Revendications

1. Arrangement de crampons de chenille pour une chenille de train de roulement d'un véhicule chenillé avec un crampon de chenille (7) qui est pourvu d'une surface de contact (A₁) prenant appui sur au moins une bande de chenille (4) de la chenille de train de roulement (2) dans l'état installé, la surface de contact (A₁) étant pourvue au côté frontal et au côté arrière, par rapport à un sens de marche de la chenille, respectivement d'un contour de bord marginal (14) courbé, chacun des contours de bord marginal (14) étant pourvu d'au moins deux rayons (R₁ à R₄) différents, lesdits rayons se diminuant à partir de la surface de contact (A₁) le long de l'étendue du contour de bord marginal (14) courbé,
**caractérisé en ce**
**qu'**une largeur de chaque contour de bord marginal (14) courbé est supérieure à sa hauteur, vu dans le sens de marche de la chenille.

2. Arrangement de crampons de chenille selon la revendication 1, avec au moins une pièce d'équipement (16, 20) fixée de façon amovible sur le crampon de chenille (7), **caractérisé en ce que** la pièce d'équipement (16, 20) présente un contour transversal qui chevauche une pointe du crampon de chenille (7) par complémentarité de forme et la flanque de part et d'autre.

3. Arrangement de crampons de chenille selon l'une quelconque des revendications précédentes, dans lequel le crampon de chenille (7), dans la région de sa pointe, présente une rainure de logement (13) pour insérer une barre d'usure (8), **caractérisé en ce que** la barre d'usure (8) est retenue dans la rainure de logement (13) en liaison par complémentarité de matières, en particulier par collage sur l'étendue.

4. Arrangement de crampons de chenille selon la revendication 3, **caractérisé en ce que** la barre d'usure comporte une arête d'engrènement.

5. Arrangement de crampons de chenille selon la revendication 4, **caractérisé en ce que** la pièce d'équipement (16, 20) comprend une section de support (21) complémentaire à une section d'engrènement de l'arête d'engrènement de la barre d'usure (8), ladite section de support prend appui sur l'arête d'engrènement de la barre d'usure par complémentarité de forme, vu dans le sens longitudinal du crampon de chenille (7).

6. Arrangement de crampons de chenille selon la revendication 4 ou 5, **caractérisé en ce que** la pièce d'équipement (16, 20) comprend au moins une section de contour (18) adaptée à une arête d'engrènement de la barre d'usure (8) de telle manière que la section de contour (18) flanque l'arête d'engrènement de part et d'autre par complémentarité de forme, vu transversalement par rapport au sens longitudinal du crampon de chenille (7).

7. Arrangement de crampons de chenille selon l'une quelconque des revendications 2 à 6, **caractérisé en ce que** la pièce d'équipement (16, 20) comprend des nervures de fixation (17, 17a) latérales arrangées asymétriquement par rapport à un élément fonctionnel de la pièce d'équipement (16, 20) de telle manière que la pièce d'équipement (16, 20) peut être raccordée au crampon de chenille (7) dans deux orientations différentes, tournées de 180°.

8. Arrangement de crampons de chenille selon l'une quelconque des revendications 2 à 7, **caractérisé en ce que** des codages (19) sont placés sur la barre d'usure (8) et/ou sur le crampon de chenille (7), les codages marquant une position de montage de la pièce d'équipement (16, 20) pour un montage ultérieur.

9. Chenille de train de roulement avec une pluralité de bandes de chenille (4) ainsi qu'avec une pluralité d'arrangements de crampons de chenille (5) selon au moins une des revendications précédentes.
